# EUROPEAN PATENT APPLICATION

(11) **EP 3 726 693 A1**
(43) Date of publication of application: **21.10.2020**
(21) Application number: 18887840.9
(22) Date of filing: 31.10.2018
(51) Int. Cl.: H02J 7/00, H02J 7/02

(54) **MOBILE CHARGING DEVICE**

(30) Priority: 14.12.2017 CN 201721743738 U
(71) Applicant: Nio Nextev Limited, Hong Kong (CN)
(72) Inventor: ZHU, Hao, Central Hong Kong (CN); WEI, Tao, Central Hong Kong (CN); WU, Mingyan, Central Hong Kong (CN)
(74) Representative: Gille Hrabal
(86) International application number: PCT/CN2018/112868
(87) International publication number: WO 2019/114445

(57) **Abstract**

The application discloses a mobile charging device comprising a movable main body. The main body is provided with a power supply providing a charging service and a plurality of components associated with the charging service. The main body is divided into at least a first space and a second space that is more accessible than the first space. The plurality of components are distributed on a storage platform defined by the second space and having at least a planar face.

## Description

### Technical Field

The application relates to the field of charging services, and specifically relates to a mobile charging device.

### Background Art

When mobile charging services are provided at present, there are diverse requirements for service capabilities, such as a service scope, a service efficiency, and diverse specifications. This requires that apparatuses providing mobile charging services themselves need to have a large service coverage and a high service efficiency, and meet the requirements for diverse charging specifications, when providing the mobile charging services.

A mobile charging vehicle can meet these requirements to a great extent. Generally, the mobile charging vehicle can move to a target position and provide a charging service for an object to be charged. The mobile charging vehicle is mounted with a power supply providing a charging service and a plurality of components associated with the charging service. These components are arranged on the charging vehicle in an integrated manner. When inspection is required or a fault occurs, it is difficult for a working person to quickly find a faulty component, and inconvenient to dismount and replace the component.

### Summary of the Invention

An aspect of the application is to provide a mobile charging device, comprising a movable main body, a power supply carried by the main body and providing a charging service for an object to be charged, and a plurality of components associated with the charging service and used in the charging service process, wherein the main body is divided into at least a first space and a second space that is more accessible than the first space, and the plurality of components are distributed on a storage platform defined by the second space and having at least a planar face.

The accessible second space of the main body is an area on the main body that can be touched or found by a working person, so the working person can operate components arranged in the space. The second space defines a storage platform having at least a planar face. At least part of the storage platform is planar, that is, the storage platform as a whole may be a planar face, or composed of a planar face and other surfaces, or a plurality of planar faces. The distribution of components on the planar face of the storage platform means that these components are distributed on the charging device in a tiled manner, so that a working person can debug, check, repair, replace and maintain these components. Moreover, due to the tiled arrangement of the components, the charging circuit is simplified, the working person can inspect the problem and fix the components conveniently, and at the same time, the actual center of mass of the entire charging device is lowered, which is particularly beneficial to the moving charging device.

In the above mobile charging device, the power supply is received in the first space of the main body, and the second space is above the first space and on the top of the main body.

The first space receives the power supply, the second space receives the components, and the two spaces have different storage effects. The first space and the second space are spaced apart in height, and the power supply and the components are separately arranged in the same charging device, which saves the space of arrangement. The power supply may be one battery or a plurality of batteries, and when the charging device has a plurality of batteries, the batteries are arranged in layers inside the main body. The components are arranged on the top of the main body to facilitate the operation of the working person.

In the above mobile charging device, the plurality of components comprise at least a first component, a second component that functions identically or similarly to that of the first component in the charging service process, and a third component that functions differently from that of the first component in the charging service process. The first component and the second component may be the same component, for example, the both are relays. The first component and the second component may alternatively be components having a similar effect, for example, a miniature circuit breaker and a molded case circuit breaker, or a contactor and a current divider. The first component, the second component, and the third component are components functioning differently, for example, the first component is a miniature circuit breaker, the second component is a molded case circuit breaker, and the third component is a contactor. The mobile charging device further comprises a plurality of protective members for housing the components, and the protective members are mounted to the main body.

In the above mobile charging device, the first component and the second component are arranged in the same protective member, and the first component and the second component are spaced apart in the height direction and removed out of the protective member respectively in a drawing manner; and the third component is arranged in another protective member.

In the above mobile charging device, the first component, the second component, and the third component are respectively arranged in different protective members.

The plurality of components may comprise (but are not limited to) the first component, the second component, and the third component. The first component and the second component function identically or similarly. The first component and the third component function differently. The components having the same effect or function are considered to be arranged adjacently or arranged together to form a new unit, and the components having different effects or functions are arranged separately, which helps the working person to find problems and in examination. In order to further protect these components, protective members may be provided for these components. The protective members store the components or the new unit composed of the components therein. The protective members are connected to the main body, that is, mounted to the storage platform.

In the above solution of three components, two protective members may be provided. One of the protective members stores the first component and the second component functioning identically. The first component is spaced apart from the second component in the height direction in the protective member, and they are arranged in the same protective member in a layered or drawer manner, that is, a target component may be removed out the protective member through drawing actions for a series of operations such as inspection and maintenance. The other protective member stores the third component functioning differently from those of the first component and the second component. Of course, although only one component is arranged in the protective member, the component may also be arranged in a drawer manner for easy operation. Moreover, the two protective members are fixed to the storage platform in a tiled manner. Alternatively, there may be four, five, ..., or more components classified according to functions and arranged on the storage platform in combination with two, three, ..., or more protective members.

Of course, various component may also be arranged separately and disposed on the storage platform in a tiled manner, and one protective member is configured for each component.

In the above mobile charging device, the protective member is a box made of sheet metal, such as a bin or a protective cabinet.

In the above mobile charging device, the storage platform has a rear part in a moving direction of the main body, and at least one of a PCB, an actuatable device, an instrument, and a driving power device for controlling the charging service process is arranged on the rear part.

In the above mobile charging device, the storage platform has a front part in a moving direction of the main body, and at least one of a heat sink adjacent to a heat generating location of the charging device and a rectifier module is arranged on the front part.

In the above mobile charging device, the storage platform has a middle part between the front part and the rear part in a moving direction of the main body, and at least one of an electrical power device, a relay, and a wiring channel for positioning connecting wires is arranged on the middle part.

Overall, the storage platform comprises a front part, a middle part, and a rear part in the moving direction. Key components in the charging circuit, comprising a heat sink, a rectifier module, etc., are arranged at the front part, the heat sink is close to a heat concentration area of the charging device, and a large space is reserved for the heat sink and the rectifier module to improve the heat dissipation and charging efficiency. Components that play an intermediate role in the charging circuit, comprising various electrical power devices and elements for positioning wires, etc., may be arranged on the middle part, which helps reasonable spatial arrangement. Instrument devices, a PCB for collecting various pieces of information in the charging process and controlling the charging circuit, driving power devices as inputs of the charging circuit, switches/executable components operable by working persons under special circumstances, etc., concentrate on the rear part, which facilitates a working person in monitoring and operating.

In the above mobile charging device, the plurality of components are one or more of an electricity meter, a resistor, a PCB, a button, a mutual inductor, a circuit breaker, a contactor, a current divider, a wire bar used inside the charging device, a connecting terminal, a fuse, a relay, a main wiring channel, a rectifier module, a wire bar for connection between electronics, a fan, and an auxiliary power supply; and the power supply carried by the main body supplies power to the plurality of components.

The mobile charging device in the application may be (but is not limited to) a mobile charging trolley, or modified from a carriage of a truck, or built on a mobile platform, and may travel to an object to be charged to provide a charging service. The trolley is mounted with batteries for charging and various components used in the charging process. According to the above solution of the mobile charging device, the working person may carry out debugging work, check the wiring harness and quickly find out the problem, or quickly replace the components that need maintenance.

Other aspects and features of the application will become apparent from the following detailed description with reference to accompanying drawings. However, it should be understood that the accompanying drawings are designed for the purpose of explanation only and are not intended to limit the scope of the application, as they should refer to the appended claims. It should also be understood that the accompanying drawings are only intended to conceptually illustrate the structures and processes described herein and are not necessarily drawn to scale unless otherwise indicated.

### Brief Description of the Drawings

The application will be more fully understood by referring to the following detailed description of specific embodiments in conjunction with the accompanying drawings, in which like reference numerals refer to like elements throughout the figures. In the figures:
Fig. 1 is a schematic structural diagram of an embodiment of a mobile charging device according to the application; and
Figs. 2 and 3 are top views of the charging device in Fig. 1, respectively.

### Detailed Description of Embodiments

In order to help those skilled in the art to accurately understand the claimed subject matter of the application, the specific embodiments of the application will be described in detail below with reference to the accompanying drawings.

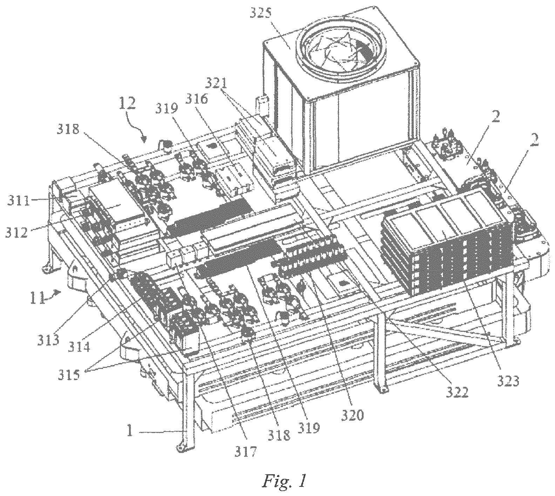

Fig. 1 is a schematic structural diagram of an embodiment of a mobile charging device according to the application. The figure shows a perspective view in a case where the charging device does not comprise a moving part (for example, a wheel). As shown in the figure, the charging device comprises a main body 1 of a frame structure. The main body 1 is provided with a power supply 2 providing a charging service and components associated with the charging service. In the figure, the power supply 2 is a battery. The main body 1 is provided with a first space 11 and a second space 12 that are spaced apart in height. The first space 11 is further divided into upper and lower sub-spaces for storing two batteries therein, respectively. The second space 12 is above the first space 11. The second space 12 is a space opened upward, and defines a substantially planar storage platform to store the components. The storage platform may be regarded as the top of the main body 1 of the frame structure, and is accessible to a working person. The components are distributed one by one on the storage platform in a tiled manner instead of stacking together in the height direction, which lowers the overall center of mass of the components and facilitates a working person to find and maintain them. When the charging device is moving, the lowering of the center of mass also helps to improve the anti-vibration property of the device.

The charging device may carry the batteries and the components to a destination to charge other batteries to be charged. At the same time, the batteries carried on the charging device also provide energy for the components. The charging device may be a trolley or mounted to a carriage of a modified vehicle.

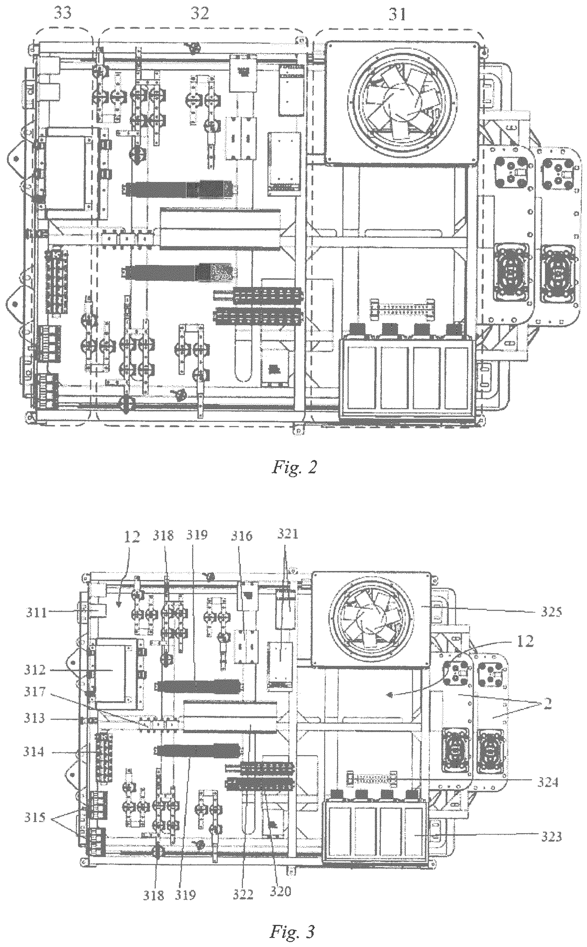

Figs. 2 and 3 are top views of the charging device in Fig. 1. The distribution of various components can be seen more clearly from Figs. 2 and 3. Referring to Figs. 1 to 3, the storage platform is divided into a front part 31, a middle part 32, and a rear part 33 in the moving direction. The rear part 33 is introduced first, and the following components are arranged there: an electricity meter 311, a PCB 312, an emergency stop button 313, a miniature circuit breaker 314, and a molded case circuit breaker 315. The electricity meter 311 may display the amount of charge. The PCB 312 is configured to collect information characterizing the states of various devices on a charging circuit, such as current and temperature, and control these devices at the same time, thereby controlling the charging service in an ideal state. The PCB 312 may also be connected to and interact with big data in the cloud. The emergency stop button 313 is used under special circumstances. The miniature circuit breaker 314 is used for a low-power device, while the molded case circuit breaker 315 is used for a high-power device. Arranging the components at the rear end of the charging device facilitates the control of the working person.

The following components are arranged in the middle part 32: electrical power devices 318 arranged symmetrically, an aluminum case resistor 316, a current mutual inductor 317, connecting terminals for communication and miniature fuses 319 arranged symmetrically, a relay 320, an auxiliary power supply 321, and a main wiring channel 322. The electrical power device 318 comprises a contactor, a current divider, and a wire bar such as a copper bar used inside the charging device. The aluminum case resistor 316 is configured to release a residual current. Some devices that play an intermediate role in the charging circuit and elements for positioning connecting wires are arranged in this area. In addition, the copper bar as an output terminal needs to be placed on the boundary of the storage platform to facilitate the charging service.

In the front part 31, a large space is reserved for a fan 325 and a rectifier module 323. A connecting copper bar 324 for connecting wires between these and the above components may also be arranged here. The fan 325 as a heat sink is aligned with an air outlet of a heat generation device (for example, the batteries below), and the arrangement of the fan 325 also depends on the type of the fan. As the heat dissipation space increases, the heat dissipation effect is improved. The front part may be an area where key components in the charging circuit are arranged.

The above components are arranged in various places of the storage platform in a tiled manner. Those skilled in the art should know that the arrangement positions of the above components relative to the storage platform are not limiting, and these components may also be rearranged according to the design requirements based on the idea of the application.

In addition, protective measures may be taken for these components, that is, a protective member (not shown) is provided for each component to store the component therein, and the protective member is mounted to the storage platform.

Of course, these components may also be reclassified and rearranged according to functions. The components with the same or similar functions are arranged together to form a new unit and then stored in the same protective member. For example, various circuit breakers are stored in the same protective member to separate from other components. Alternatively, strong current components are arranged in the same protective member to separate from other weak current components. The protective member may be a box made of sheet metal or a cabinet having a certain height for storing a plurality of components. The cabinet is of a drawer type, and different components are arranged in different drawer layers. This is still convenient for a working person to carry out a series of operations such as check and replacement. In the embodiments shown in Figs. 1 to 3, the components may be equipped with protective members in the following ways: the miniature circuit breaker 314, the molded case circuit breaker 315, the electricity meter 311, and the PCB 312 as input components are arranged in a plurality of layers in one protective member, one component being arranged in each layer; alternatively, the miniature circuit breaker 314, the molded case circuit breaker 315, and the electricity meter 311 are in one protective member, and the PCB 312 is alone in the other protective member; the relay 320, the fuse 319, and a contactor in the electrical power device 318, which are strong current devices, are arranged in a plurality of layers in another protective member to separate from weak current devices such as the PCB 312; and the fan 325 and the rectifier module 323 are arranged in the same protective member or in different protective members, and finally these protective members are arranged on the storage platform in a tiled manner. The working person may first determine the protective member where the component that needs to be inspected or replaced is located, and then the components in various layers in the protective member are checked. It would be understood that the components may also be arranged in the protective members in other combinations that facilitate inspection or replacement.

Although specific embodiments of the application have been shown and described in detail to illustrate the principles of the application, it should be understood that the application may be implemented in other ways without departing from such principles.

## Claims

1. A mobile charging device, comprising a movable main body (11), a power supply (2) carried by the main body (11) and providing a charging service for an object to be charged, and a plurality of components associated with the charging service and used in the charging service process, **characterized in that** the main body (1) is divided into at least a first space (11) and a second space (12) that is more accessible than the first space (11), and the plurality of components are distributed on a storage platform defined by the second space (12) and having at least a planar face.

2. The mobile charging device according to claim 1, **characterized in that** the power supply (2) is received in the first space (11) of the main body (1), and the second space (12) is above the first space (11) and on the top of the main body (1).

3. The mobile charging device according to claim 1 or 2, **characterized in that** the plurality of components comprise at least a first component, a second component that functions identically or similarly to that of the first component in the charging service process, and a third component that functions differently from that of the first component in the charging service process; and the mobile charging device further comprises a plurality of protective members for housing the components, and the protective members are mounted to the main body.

4. The mobile charging device according to claim 3, **characterized in that** the first component and the second component are arranged in the same protective member, and the first component and the second component are spaced apart in the height direction and removed out of the protective member respectively in a drawing manner; and the third component is arranged in another protective member.

5. The mobile charging device according to claim 3, **characterized in that** the first component, the second component, and the third component are respectively arranged in different protective members.

6. The mobile charging device according to claim 3, **characterized in that** the protective member is a box made of sheet metal.

7. The mobile charging device according to claim 1 or 2, **characterized in that** the storage platform has a rear part (33) in a moving direction of the main body (1), and at least one of a printed circuit board (PCB), an actuatable device, an instrument, and a driving power device for controlling the charging service process is arranged on the rear part (33).

8. The mobile charging device according to claim 1 or 2, **characterized in that** the storage platform has a front part (31) in a moving direction of the main body (1), and at least one of a heat sink adjacent to a heat generating location of the charging device and a rectifier module is arranged on the front part (31).

9. The mobile charging device according to claim 1 or 2, **characterized in that** the storage platform has a middle part (32) between the front part (31) and the rear part (33) in a moving direction of the main body (1), and at least one of an electrical power device, a relay, and a wiring channel for positioning connecting wires is arranged on the middle part (32).

10. The mobile charging device according to claim 1 or 2, **characterized in that** the plurality of components are one or more of an electricity meter, a resistor, a PCB, a button, a mutual inductor, a circuit breaker, a contactor, a current divider, a wire bar used inside the charging device, a connecting terminal, a fuse, a relay, a main wiring channel, a rectifier module, a wire bar for connection between electronics, a fan, and an auxiliary power supply; and the power supply (2) carried by the main body (11) supplies power to the plurality of components.
